# EUROPEAN PATENT SPECIFICATION

(11) **EP 4 316 903 B1**
(45) Date of publication and mention of the grant of the patent: **30.09.2026**
(21) Application number: 22774079.2
(22) Date of filing: 14.03.2022
(51) Int. Cl.: B60L 58/30, B60L 50/70, B60L 50/75, B60L 58/40, B60L 50/71, B60L 50/72, B60L 58/00, G01R 31/00, G07C 5/08, G06F 17/00

(54) **METHOD AND APPARATUS FOR DETERMINING ENDURANCE MILEAGE, AND VEHICLE**
VERFAHREN UND VORRICHTUNG ZUR BESTIMMUNG DES AUSDAUERKILOMETERSTANDES UND FAHRZEUG
PROCÉDÉ ET APPAREIL DE DÉTERMINATION DE KILOMÉTRAGE D'AUTONOMIE, ET VÉHICULE

(30) Priority: 24.03.2021 CN 202110313522
(43) Date of publication of application: 07.02.2024
(73) Proprietor: Great Wall Motor Company Limited, Hebei 071000 (CN)
(72) Inventor: WU, Maiqing, Baoding, Hebei 071000 (CN); LIU, Ximing, Baoding, Hebei 071000 (CN); SHI, Xu, Baoding, Hebei 071000 (CN); YAN, Gang, Baoding, Hebei 071000 (CN); LI, Xuejing, Baoding, Hebei 071000 (CN)
(74) Representative: Klunker IP Patentanwälte PartG mbB
(86) International application number: PCT/CN2022/080774
(87) International publication number: WO 2022/199417

(56) References cited:
- CN-A- 107 225 985
- CN-A- 110 861 507
- CN-A- 110 861 507
- CN-A- 111 422 099
- CN-A- 112 389 213
- CN-A- 112 389 213
- CN-A- 115 402 109
- JP-A- 2002 167 000
- JP-A- 2020 048 247
- US-A1- 2012 191 334
- US-A1- 2014 005 855

## Description

### TECHNICAL FIELD

The present invention relates to the technical field of fuel cell vehicles, and more particularly to a method and an apparatus for determining an endurance mileage (cruising range), a vehicle comprising the apparatus, a computer-program, and a computer-readable storage medium.

### BACKGROUND

With the development of science and technology and the urgent need to protect the ecological environment, the automotive industry has also focused its development on protecting the environment and saving resources. In recent years, the number of fuel cell vehicles has been continuously raising. Being different from traditional oil-fueled vehicles, fuel cell vehicles generate electricity to drive the vehicle through the chemical reaction of hydrogen and oxygen, and are advantageous in zero or near zero emissions, fast refueling, reduction of water pollution caused by oil leakage, and improvement of fuel economy. Further, in order to allow users to understand more intuitively when fuel needs to be added, users need to know the remaining driving mileage of the hydrogen fuel, so that users can refuel hydrogen in time as needed.

In the prior art, it is disclosed that the calculation of the endurance mileage of a hydrogen fuel cell vehicle at a current moment is based on the hydrogen consumption rate of the hydrogen fuel cell at the current moment, the remaining usable hydrogen amount in the hydrogen cylinder at the current moment, the hydrogen utilization rate of the hydrogen fuel cell, and the vehicle speed of the hydrogen fuel cell vehicle at the current moment. When performing the calculation using such method, the hydrogen consumption rate and the hydrogen utilization rate of the hydrogen fuel cell need to be calculated after information collection by the relevant sensors of the hydrogen storage tank, however, because the collected information has errors, there is also an error existing in the endurance mileage obtained by this method, which leads to the problem that the endurance mileage acquired by the user may have poor accuracy, and therefore reduce the user's driving experience.

CN 110 861 507 A discloses a hydrogen fuel-cell vehicle endurance mileage calculating method and device. The hydrogen fuel-cell vehicle endurance mileage calculating method comprises: calculating the hydrogen consumption rate of a hydrogen fuel-cell at the current moment, the rest usable hydrogen quantity of a hydrogen cylinder at the current moment, and the hydrogen utilization ratio of the hydrogen fuel-cell; obtaining the speed of a hydrogen fuel-cell vehicle at the current moment; and finally, calculating the endurance mileage of the hydrogen fuel-cell vehicle at the current moment according to the hydrogen consumption rate of the hydrogen fuel-cell at the current moment, the rest usable hydrogen quantity of the hydrogen cylinder at the current moment, the hydrogen utilization ratio of the hydrogen fuel-cell, and the speed of the hydrogen fuel-cell vehicle at the current moment. Through the hydrogen fuel-cell vehicle endurance mileage calculating method and device, the endurance mileage of the hydrogen fuel-cell vehicle can be precisely calculated to provide a reference for a user, so that the user can precisely judge when to add the fuel.

### SUMMARY

It is an object of the present invention to provide a method and an apparatus for determining an endurance mileage, a vehicle comprising the apparatus, a computer program, and computer-readable storage medium.

The object is achieved by the features of independent claim 1 regarding the method, of independent claim 8 regarding the apparatus, of independent claim 9 regarding the vehicle, of in dependent claim 10 regarding the computer program, and of independent claim 11 regarding the computer-readable storage medium.

By the present invention defined in the claims, when a start signal of the vehicle is acquired, a first hydrogen consumption parameter and a second hydrogen consumption parameter of a fuel cell of a vehicle and a current driving parameter of the vehicle are acquired; an average hydrogen consumption per unit mileage of the vehicle is determined according to the first hydrogen consumption parameter and the current driving parameter; and a target endurance mileage of the vehicle is determined according to the second hydrogen consumption parameter and the average hydrogen consumption per unit mileage. In this way, the average hydrogen consumption per unit mileage of the vehicle can be obtained by calculation based on the first hydrogen consumption parameter of the fuel cell and the current driving parameter of the vehicle. Compared with the instantaneous hydrogen consumption at the current moment, the average hydrogen consumption per unit mileage can reflect the current average hydrogen consumption of the vehicle more accurately, so that the endurance mileage of the vehicle can be calculated based on the average hydrogen consumption per unit mileage, which can improve the accuracy and precision of the calculation of the endurance mileage of the vehicle, and is convenient for users to plan subsequent driving mileage based on the endurance mileage and refuel hydrogen as needed, whereby improving the user's driving experience.

Additional aspects and advantages of the present invention will be introduced in the following description, and some of the additional aspect and advantages of the present invention will become apparent from the following description, or may be learned by practice of the present application.

### DESCRIPTION OF THE DRAWINGS

The above and/or additional aspects and advantages of the present invention will become apparent and understandable from the following description of the accompanying drawings, in which:
FIG. 1 is a flow chart of a method for determining an endurance mileage;
FIG. 2 is a flow chart of another method for determining an endurance mileage;
FIG. 3 is a block diagram of an apparatus for determining an endurance mileage;
FIG. 4 is a block diagram of another apparatus for determining an endurance mileage;
FIG. 5 is a structural block diagram of a vehicle;
FIG. 6 is a schematic structural diagram of a computational processing device; and
FIG. 7 is a schematic diagram of a portable or fixed program code storage unit for implementation of the method.

### DETAILED DESCRIPTION OF THE INVENTION

The present invention are described in detail below, examples of which are illustrated in the drawings, in which the same or similar reference numerals denote the same or similar elements or elements having the same or similar functions throughout. The below figures are exemplary and are intended to explain the present invention and should not be construed as limiting the present invention as defined in the claims.

Firstly, the application scenarios of the present invention are described. Due to the advantages of the fuel cell vehicles in zero or near zero emissions, fast refueling, reduction of water pollution caused by oil leakage, and improvement of fuel economy, the number of fuel cell vehicles has been continuously raising in recent years. In order to allow users to reasonably plan the driving mileage and understand more intuitively when to add fuel, it is necessary to for the users to know the remaining driving mileage of hydrogen fuel, so that users can refuel hydrogen in time as needed. In the endurance mileage (cruising range) calculation method in the prior art, the hydrogen consumption rate at the current moment and the hydrogen utilization rate of the hydrogen fuel cell need to be calculated after information collection by the relevant sensors of the hydrogen storage tank, however, because the collected information has errors and the endurance mileage calculated based on the hydrogen consumption rate at the current moment and the hydrogen utilization rate is only an instantaneous endurance mileage, there is also an error existing between the endurance mileage calculated in the prior art and the endurance mileage corresponding to the actual working condition, which leads to the problem that the endurance mileage acquired by the user may have poor accuracy, and therefore reduce the user's driving experience.

In order to solve the above problems, the present invention provides a method and an apparatus for determining an endurance mileage and a vehicle. When a start signal of the vehicle is acquired, a first hydrogen consumption parameter and a second hydrogen consumption parameter of a fuel cell of a vehicle and a current driving parameter of the vehicle are acquired; an average hydrogen consumption per unit mileage of the vehicle is determined according to the first hydrogen consumption parameter and the current driving parameter; and a target endurance mileage of the vehicle is determined according to the second hydrogen consumption parameter and the average hydrogen consumption per unit mileage. In this way, the average hydrogen consumption per unit mileage of the vehicle can be obtained by calculation based on the first hydrogen consumption parameter of the fuel cell and the current driving parameter of the vehicle. Compared with the instantaneous hydrogen consumption at the current moment, the average hydrogen consumption per unit mileage can reflect the current average hydrogen consumption of the vehicle more accurately, so that the endurance mileage of the vehicle can be calculated based on the average hydrogen consumption per unit mileage, which can improve the accuracy and precision of the calculation of the endurance mileage of the vehicle, and is convenient for users to plan subsequent driving mileage based on the endurance mileage and refuel hydrogen as needed, whereby improving the user's driving experience.

The content of the present invention will be described in detail below.

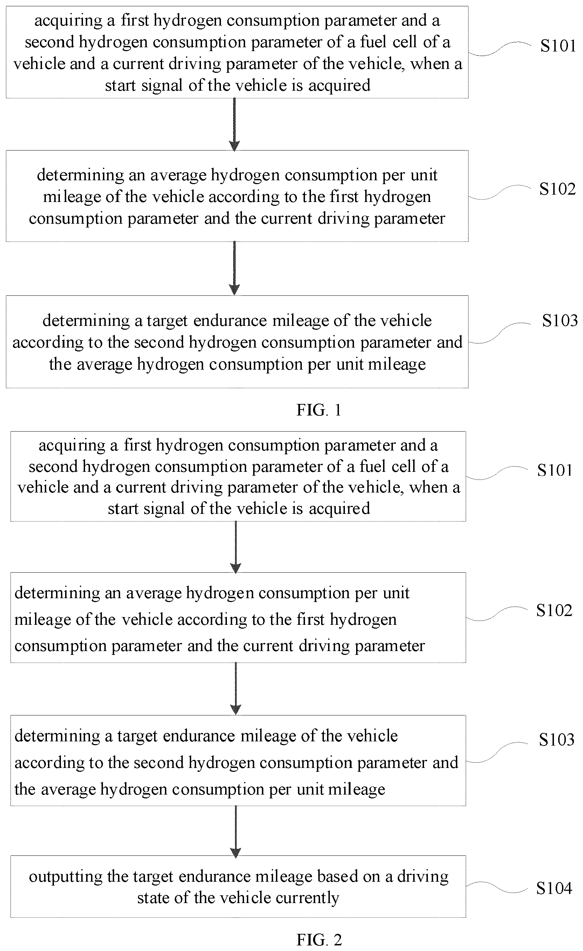

FIG. 1 is a flow chart of a method for determining an endurance mileage according to an exemplary implementation. As shown in FIG. 1, the method includes the following steps:
In step S101, when a start signal of the vehicle is acquired, a first hydrogen consumption parameter and a second hydrogen consumption parameter of a fuel cell of a vehicle and a current driving

The first hydrogen consumption parameter comprises: an instantaneous hydrogen consumption and a preset initial hydrogen consumption; and the current driving parameter comprises: a preset initial mileage and a current driving mileage of the vehicle.

In a possible implementation, the start signal of the vehicle may be that the fuel cell enters the running state or the hot standby state. Specifically, the hot standby state may be a state where the fuel cell is working at a minimum output power. In the case that a vehicle start signal is acquired, the current driving parameter of the vehicle is further obtained.

Specifically, the instantaneous hydrogen consumption in the first hydrogen consumption parameter can be sent to a power control unit through the fuel cell system; the preset initial hydrogen consumption can be set according to actual needs, for example, the preset initial hydrogen consumption can be half of the hydrogen consumption certification index per 100 kilometers in the vehicle announcement; or alternatively, the hydrogen consumption per 100 kilometers calculated after the last vehicle startup is used as the preset initial hydrogen consumption.

The preset initial mileage in the current driving parameter of the vehicle can be set according to actual needs, for example, the preset initial mileage can be half of the fuel cell mileage certification index in the vehicle announcement; the current driving mileage of the vehicle can be determined by a current vehicle speed and a current driving time of the vehicle, and the current vehicle speed and the current driving time can be obtained through the vehicle controller area network (CAN) bus.

In step S102, an average hydrogen consumption per unit mileage of the vehicle is determined according to the first hydrogen consumption parameter and the current driving parameter

The average hydrogen consumption per unit mileage may be an average hydrogen consumption of the vehicle traveling 1 km.

In this step, the current driving mileage of the vehicle can be determined according to the current vehicle speed and the current travel time. Specifically, the current driving mileage of the vehicle can be obtained by integrating the current vehicle speed and the current travel time, and then the average hydrogen consumption per unit mileage is determined based on a first formula according to the instantaneous hydrogen consumption, the preset initial hydrogen consumption, the current driving mileage, and the preset initial mileage. The first formula is as follows:
${H}_{1} = \frac{{H}_{S} + {H}_{0}}{\left({D}_{1}+{D}_{0}∗0.1\right) ∗ 10} \times f \times 0.01 ,$
in which, *H₁* represents the average hydrogen consumption per unit mileage, *H_{S}* represents the instantaneous hydrogen consumption, *H*₀ represents the preset initial hydrogen consumption, *D₁* represents the current driving mileage, *D₀* represents the preset initial mileage, and *f* is a mileage factor. It should be noted that relevant parameters *0.1, *10 and *0.01 in the first formula are configured for unit conversion. When the units of the instantaneous hydrogen consumption, the preset initial hydrogen consumption, the current driving mileage, and the preset initial mileage are consistent, *0.1, *10 and *0.01 can be deleted from the first formula.

**In** step S103, a target endurance mileage of the vehicle is determined according to the second hydrogen consumption parameter and the average hydrogen consumption per unit mileage.

The second hydrogen consumption parameter comprises: a current hydrogen remaining amount and a preset basic hydrogen amount of the fuel cell.

**In** this step, the hydrogen consumption per 100 kilometers of the vehicle is determined according to the average hydrogen consumption per unit mileage. Specifically, the hydrogen consumption per 100 kilometers of the vehicle = the average hydrogen consumption per unit mileage * 100; and the target endurance mileage is determined based on a second formula according to the current remaining hydrogen amount, the preset basic hydrogen amount, and the hydrogen consumption per 100 kilometers. The second formula is:
${D}_{R} = \frac{\left({H}_{R}-{H}_{UL}\right) ∗ 100}{{H}_{U}} ,$
in which, *D_{R}* is the target endurance mileage, *H_{R}* is the current hydrogen remaining amount, *H_{UL}* is the preset basic hydrogen amount, and *H_{U}* is the hydrogen consumption per 100 kilometers. The second formula (*H_{R} - H_{UL}*) *** 100 is configured for unit conversion. **In** this way, the target endurance mileage of the vehicle can be obtained by dividing the available remaining hydrogen amount of the vehicle by the hydrogen consumption per 100 kilometers of the vehicle, and then the target endurance mileage is output to the user. It should be noted that the preset basic hydrogen amount refers to the hydrogen amount that cannot be used in the hydrogen storage tank, and the preset basic hydrogen amount will be indicated in the vehicle announcement.

In addition, in the present invention, it can also be determined whether the power control unit of the vehicle enters a dormant state according to a power-off signal of the vehicle, and if it is determined that the power control unit enters the dormant state, a calculated hydrogen consumption per 100 kilometers is stored in the memory of the vehicle controller, such that the hydrogen consumption per 100 kilometers is used as the preset initial hydrogen consumption when the vehicle start signal is acquired next time.

Using the above apparatus, the average hydrogen consumption per unit mileage of the vehicle can be obtained by calculation based on the first hydrogen consumption parameter of the fuel cell and the current driving parameter of the vehicle. Compared with the instantaneous hydrogen consumption at the current moment, the average hydrogen consumption per unit mileage can reflect the current average hydrogen consumption of the vehicle more accurately, so that the endurance mileage of the vehicle can be calculated based on the average hydrogen consumption per unit mileage, which can improve the accuracy and precision of the calculation of the endurance mileage of the vehicle, and is convenient for users to plan subsequent driving mileage based on the endurance mileage and refuel hydrogen as needed, whereby improving the user's driving experience.

FIG. 2 is a flow chart of another method for determining an endurance mileage according to an exemplary implementation. As shown in FIG. 2, the method further includes the following steps:

in step S104, the target endurance mileage is output based on a current driving state of the vehicle.

In a possible implementation of this step, the target endurance mileage can be directly output. For example, the target endurance mileage can be output through voice information. Assuming that the target endurance mileage of the vehicle is 100 km, the user is informed by a loudspeaker in the vehicle that "Your current endurance mileage is 100 km", or alternatively, the target endurance mileage is displayed on a vehicle dashboard, and the user can know the target endurance mileage through the vehicle dashboard. This is just an example, and the present invention is not limited thereto.

In another possible implementation of this step, the historically output endurance mileage (such as the vehicle endurance mileage being displayed on an instrument panel) can also be corrected and displayed according to the target endurance mileage. Specifically, the current driving state of the vehicle can be obtained; a correction cycle for correcting the endurance mileage output by the vehicle (i.e. an endurance mileage to be corrected that has been historically output) as a target correction strategy is determined according to the current driving state and an endurance mileage difference, in which, the endurance mileage difference is a difference between the target endurance mileage and an endurance mileage to be corrected that has been historically output; then, an endurance mileage to be corrected is corrected according to the correction cycle for correcting the endurance mileage output by the vehicle, and a corrected endurance mileage is output.

Specifically, the driving state may include an idling state or a non-idling state. In case that the endurance mileage to be corrected is greater than the target endurance mileage, if the vehicle is in the non-idling driving state, it is determined whether the endurance mileage difference is greater than or equal to a first preset difference threshold; when the endurance mileage difference is greater than or equal to the first preset difference threshold, the correction cycle for correcting the endurance mileage output by the vehicle controlling the endurance mileage output by the vehicle to decrease progressively according to a first preset correction cycle; and when the endurance mileage difference is smaller than the first preset difference threshold, the correction cycle for correcting the endurance mileage output by the vehicle controlling the endurance mileage output by the vehicle to decrease progressively according to a second preset correction cycle, in which, the second preset correction cycle is greater than the first preset correction cycle.

When the endurance mileage to be corrected is greater than the target endurance mileage, in such condition, the actual endurance mileage is smaller than the endurance mileage to be corrected that has been historically output, and the correction cycle for correcting the endurance mileage output by the vehicle needs to be adopted to appropriately reduce the endurance mileage to be corrected that has been historically output, so that the user can know the accurate endurance mileage. For example, assuming that the first preset difference threshold is 10 km, the first preset correction cycle is 10 s, and the second preset correction cycle is 30 s, when the endurance mileage difference is determined to be > 10 km, the output endurance mileage is reduced by 1 km every 10 s, and when the endurance mileage difference is determined to be <10 km, the output endurance mileage is reduced by 1 km every 30 s. It needs to be explained that the larger the endurance mileage difference, the shorter the correction cycle should be, so that the output endurance mileage can be corrected more effectively.

In addition, in case that the endurance mileage to be corrected is greater than the target endurance mileage, if the vehicle is in the idling state, it is determined whether the endurance mileage difference is greater than a second preset difference threshold; when the endurance mileage difference is greater than the second preset difference threshold, the correction cycle for correcting the endurance mileage output by the vehicle controlling the endurance mileage output by the vehicle to decrease progressively according to a third preset correction cycle; and when the endurance mileage difference is smaller than or equal to the second preset difference threshold, the correction cycle for correcting the endurance mileage output by the vehicle controlling the endurance mileage currently output by the vehicle to remain unchanged; in which, the third preset correction cycle is greater than the second preset correction cycle, and the first preset difference threshold is greater than the second preset difference threshold.

If the vehicle is in the idling state, since the hydrogen consumption of the vehicle in the idling state is very low, the third preset correction cycle is greater than the second preset correction cycle. For example, assuming that the second preset difference threshold is 0 km, and the third preset correction cycle is 100 s, then in the case that the endurance mileage difference is determined to be > 0 km, the output endurance mileage is reduced by 1 km every 100 s; and when the endurance mileage difference is smaller than or equal to 0 km, the endurance mileage currently output by the vehicle is controlled to remain unchanged.

In case that the endurance mileage to be corrected is smaller than the target endurance mileage, it is determined whether the endurance mileage difference is greater than or equal to a third preset difference threshold. In case that the endurance mileage difference is greater than or equal to the third preset difference threshold, the correction cycle for correcting the endurance mileage output by the vehicle is adapted to be: outputting the target endurance mileage as the corrected endurance mileage when the endurance mileage to be corrected is greater than or equal to a preset display threshold, and outputting a preset display invalid value when the endurance mileage to be corrected is smaller than the preset display threshold; in which, the third preset difference threshold is greater than the second preset difference threshold.

It should be noted that, when the endurance mileage to be corrected is smaller than the target endurance mileage, it is possible that the vehicle has been refueled with hydrogen, so it needs to be determined whether the endurance mileage difference is greater than or equal to the third preset difference threshold, and in case that the endurance mileage difference is greater than or equal to the third preset difference threshold, the pressure in the hydrogen storage tank will decrease due to too little remaining hydrogen amount, resulting in a small amount of hydrogen that can be released, which in turn leads to inaccurate calculations. Because a part of the hydrogen cannot be used, in order to avoid the situation that the displayed data indicates there is still have mileage, but in fact no endurance mileage remains, it needs to be further determined whether the cruising mileage to be corrected is greater than or equal to the preset display threshold. In the case that the cruising mileage to be corrected is greater than or equal to the preset display threshold, it means that the target endurance mileage is still relatively large, and the above-mentioned situation that may be caused by too little remaining hydrogen will not occur. Therefore, the target endurance mileage is output as the corrected endurance mileage. When the endurance mileage to be corrected is smaller than the preset display threshold, the preset display invalid value is output. For example, "0" is output. In such condition, the user can perform hydrogen refueling as needed after obtaining the target endurance mileage.

In case that the endurance mileage difference is smaller than the third preset difference threshold, and when the vehicle is in the non-idling driving state, the correction cycle for correcting the endurance mileage output by the vehicle controlling the endurance mileage output by the vehicle to decrease progressively according to a fourth preset correction cycle; in which, the fourth preset correction cycle is greater than the third preset correction cycle; and when the vehicle is in the idling state, the correction cycle for correcting the endurance mileage output by the vehicle controlling the endurance mileage currently output by the vehicle to remain unchanged.

In case that the endurance mileage to be corrected is smaller than the target endurance mileage, it means that the actual endurance mileage of the vehicle in such condition is greater than the historically output endurance mileage, and the output target endurance mileage should be slowly reduced when correcting the endurance mileage, so the fourth preset correction cycle should be much longer than the third preset correction cycle. For example, the fourth preset correction cycle can be 400 s, the output endurance mileage is reduced by 1 km every 400 s; in addition, due that the hydrogen consumption of the vehicle is very low in the idling state, and the endurance mileage difference is smaller than the third preset difference threshold in such condition, which indicates that the difference between the actual endurance mileage and the historically output endurance mileage is not very large, therefore, the endurance mileage currently output by the vehicle is controlled to remain unchanged.

In this way, by adopting different target correction strategies to output the target endurance mileage, the endurance mileage of the vehicle can be more accurately reflected, which allows users to know the endurance mileage of the vehicle in time, and then arrange the itinerary according to the endurance mileage of the vehicle and consider whether it is necessary to refuel the hydrogen for the vehicle, so as to facilitate the travel of the user and improve the driving experience of the user.

Considering that the endurance mileage of the vehicle after hydrogen refuel will greatly change, the present invention further discloses corresponding correction of the endurance mileage in the hydrogen refueling mode of the vehicle. Therefore, in another possible implementation of this step, a state of a hydrogen filler cap of the vehicle can be obtained. In case that it is determined that the vehicle is in the hydrogen refueling state according to the state of the hydrogen filler cap of the vehicle, when the endurance mileage difference is greater than or equal to a fourth preset difference threshold, the endurance mileage output by the vehicle is corrected to be the target endurance mileage; and if the endurance mileage difference is smaller than the fourth preset difference threshold, the endurance mileage currently output by the vehicle is controlled to remain unchanged.

The vehicle can obtain the state of the hydrogen filler cap of the vehicle through the CAN bus.

When the vehicle detects that the hydrogen filler cap is open, it means that the vehicle is in the hydrogen refueling mode. Since the endurance mileage of the vehicle will change after the hydrogen refueling, it is necessary to perform correction on the endurance mileage to be corrected of the vehicle that has been historically output, and further, if the endurance mileage difference is greater than or equal to the fourth preset difference threshold, the endurance mileage output by the vehicle is corrected to be the target endurance mileage. For example, assuming that the preset difference threshold is 10 km, then in case that it is determined that endurance mileage difference is greater than or equal to 10 km, the endurance mileage output by the vehicle is corrected to the target endurance mileage. In addition, if the endurance mileage difference is smaller than the preset difference threshold, the endurance mileage output by the vehicle remains unchanged.

In addition, during the process of plugging and unplugging the charging gun, that is, when hydrogen is being refueled, because the vehicle is in a static state in such condition, the fuel cell of the vehicle is in a stopped state, and the hydrogen is not consumed, so the endurance mileage displayed on the dashboard of the vehicle remains unchanged and maintains the endurance mileage value before the hydrogen refueling.

Using the above method, the average hydrogen consumption per unit mileage of the vehicle can be obtained by calculation based on the first hydrogen consumption parameter of the fuel cell and the current driving parameter of the vehicle. Compared with the instantaneous hydrogen consumption at the current moment, the average hydrogen consumption per unit mileage can reflect the current average hydrogen consumption of the vehicle more accurately, so that the endurance mileage of the vehicle can be calculated based on the average hydrogen consumption per unit mileage, which can improve the accuracy and precision of the calculation of the endurance mileage of the vehicle, and is convenient for users to plan subsequent driving mileage based on the endurance mileage and refuel hydrogen as needed, whereby improving the user's driving experience.

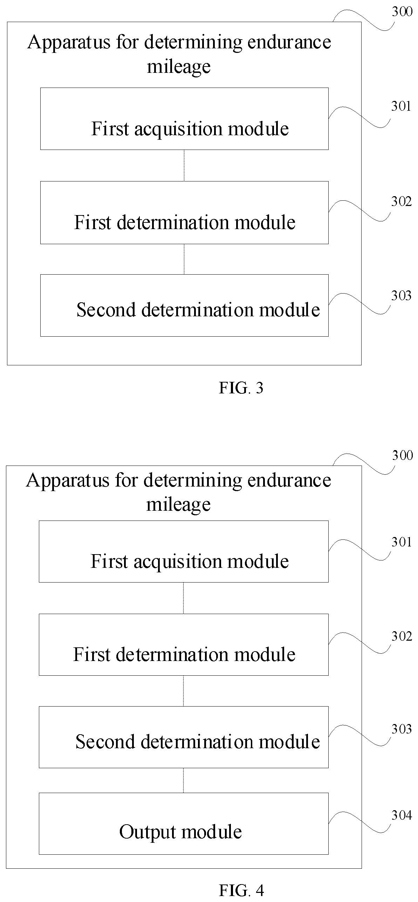

FIG. 3 is a block diagram of an apparatus 300 for determining an endurance mileage according to an exemplary implementation. As shown in FIG. 3, the apparatus includes:
a first acquisition module 301, configured for acquiring a first hydrogen consumption parameter and a second hydrogen consumption parameter of a fuel cell of a vehicle and a current driving parameter of the vehicle, when a start signal of the vehicle is acquired; and
a first determination module 302, configured for determining an average hydrogen consumption per unit mileage of the vehicle according to the first hydrogen consumption parameter and the current driving parameter.

The first hydrogen consumption parameter comprises: an instantaneous hydrogen consumption and a preset initial hydrogen consumption. The current driving parameter comprises: a preset initial mileage and a current driving mileage of the vehicle. The first determination module is configured for:
determining the average hydrogen consumption per unit mileage based on a first formula according to the instantaneous hydrogen consumption, the preset initial hydrogen consumption, the current driving mileage, and the preset initial mileage.

The first formula comprises:
${H}_{1} = \frac{{H}_{S} + {H}_{0}}{\left({D}_{1}+{D}_{0}∗0.1\right) ∗ 10} \times f \times 0.01 ,$
in which, *H₁* represents the average hydrogen consumption per unit mileage, *H_{S}* represents the instantaneous hydrogen consumption, *H*₀ represents the preset initial hydrogen consumption, *D₁* represents the current driving mileage, *D₀* represents the preset initial mileage, and *f* is a mileage factor.

A second determination module 303 is configured for determining a target endurance mileage of the vehicle according to the second hydrogen consumption parameter and the average hydrogen consumption per unit mileage.

The second hydrogen consumption parameter comprises: a current hydrogen remaining amount and a preset basic hydrogen amount of the fuel cell. The second determination module is configured for:
determining the hydrogen consumption per 100 kilometers of the vehicle according to the average hydrogen consumption per unit mileage; and
determining the target endurance mileage based on a second formula according to the current remaining hydrogen amount, the preset basic hydrogen amount, and the hydrogen consumption per 100 kilometers;
the second formula comprises:
   ${D}_{R} = \frac{\left({H}_{R}-{H}_{UL}\right) ∗ 100}{{H}_{U}} ,$
in which, *D_{R}* is the target endurance mileage, *H_{R}* is the current hydrogen remaining amount, *H_{UL}* is the preset basic hydrogen amount, and *H_{U}* is the hydrogen consumption per 100 kilometers.

FIG. 4 is a block diagram of another apparatus 300 for determining an endurance mileage according to an exemplary implementation. As shown in FIG. 4, the apparatus further includes:
an output module 304, configured for outputting the target endurance mileage based on a current driving state of the vehicle.

The output module 304 is configured for: obtaining the current driving state of the vehicle; determining a correction cycle for correcting the endurance mileage output by the vehicle as a target correction strategy according to the driving state and an endurance mileage difference, in which, the endurance mileage difference is a difference between the target endurance mileage and an endurance mileage to be corrected that has been historically output; and correcting the endurance mileage to be corrected according to the correction cycle for correcting the endurance mileage output by the vehicle, and outputting a corrected endurance mileage.

Optionally, the driving state includes an idling state or a non-idling driving state. The output module 304 is configured for: in case that the endurance mileage to be corrected is greater than the target endurance mileage, if the vehicle is in the non-idling driving state, determining whether the endurance mileage difference is greater than or equal to a first preset difference threshold; and when the endurance mileage difference is greater than or equal to the first preset difference threshold, adapting the correction cycle for correcting the endurance mileage output by the vehicle controlling the endurance mileage output by the vehicle to decrease progressively according to a first preset correction cycle; when the endurance mileage difference is smaller than the first preset difference threshold, adapting the correction cycle for correcting the endurance mileage output by the vehicle controlling the endurance mileage output by the vehicle to decrease progressively according to a second preset correction cycle, in which, the second preset correction cycle is greater than the first preset correction cycle; and in case that the endurance mileage to be corrected is greater than the target endurance mileage, if the vehicle is in the idling state, determining whether the endurance mileage difference is greater than a second preset difference threshold; and when the endurance mileage difference is greater than the second preset difference threshold, adapting the correction cycle for correcting the endurance mileage output by the vehicle e controlling the endurance mileage output by the vehicle to decrease progressively according to a third preset correction cycle; and when the endurance mileage difference is smaller than or equal to the second preset difference threshold, adapting the correction cycle for correcting the endurance mileage output by the vehicle controlling the endurance mileage currently output by the vehicle to remain unchanged, in which, the third preset correction cycle is greater than the second preset correction cycle, and the first preset difference threshold is greater than the second preset difference threshold.

Optionally, the output module 304 is further configured for: determining, in case that the endurance mileage to be corrected is smaller than the target endurance mileage, whether the endurance mileage difference is greater than or equal to a third preset difference threshold; in case that the endurance mileage difference is greater than or equal to the third preset difference threshold, adapting the correction cycle for correcting the endurance mileage output by the vehicle to be: outputting the target endurance mileage as the corrected endurance mileage when the endurance mileage to be corrected is greater than or equal to a preset display threshold, and outputting a preset display invalid value when the endurance mileage to be corrected is smaller than the preset display threshold; in which, the third preset difference threshold is greater than the second preset difference threshold; and in case that the endurance mileage difference is smaller than the third preset difference threshold, and when the vehicle is in the non-idling driving state, adapting the correction cycle for correcting the endurance mileage output by the vehicle controlling the endurance mileage output by the vehicle to decrease progressively according to a fourth preset correction cycle; in which, the fourth preset correction cycle is greater than the third preset correction cycle; and when the vehicle is in the idling state, adapting the correction cycle for correcting the endurance mileage output by the vehicle controlling the endurance mileage currently output by the vehicle to remain unchanged.

Optionally, the driving state further includes a hydrogen refueling state. The output module 304 is further configured for: obtaining a state of a hydrogen filler cap of the vehicle; and in case that it is determined that the vehicle is in the hydrogen refueling state according to the state of the hydrogen filler cap of the vehicle, when the endurance mileage difference is greater than or equal to a fourth preset difference threshold, correcting the endurance mileage output by the vehicle to be the target endurance mileage; and when the endurance mileage difference is smaller than the fourth preset difference threshold, controlling the endurance mileage currently output by the vehicle to remain unchanged.

Regarding the apparatus, the specific manner in which each module executes operations has been described in detail in relation to the method, and will not be described in detail herein.

Using the above apparatus, the average hydrogen consumption per unit mileage of the vehicle can be obtained by calculation based on the first hydrogen consumption parameter of the fuel cell and the current driving parameter of the vehicle. Compared with the instantaneous hydrogen consumption at the current moment, the average hydrogen consumption per unit mileage can reflect the current average hydrogen consumption of the vehicle more accurately, so that the endurance mileage of the vehicle can be calculated based on the average hydrogen consumption per unit mileage, which can improve the accuracy and precision of the calculation of the endurance mileage of the vehicle, and is convenient for users to plan subsequent driving mileage based on the endurance mileage and refuel hydrogen as needed, whereby improving the user's driving experience.

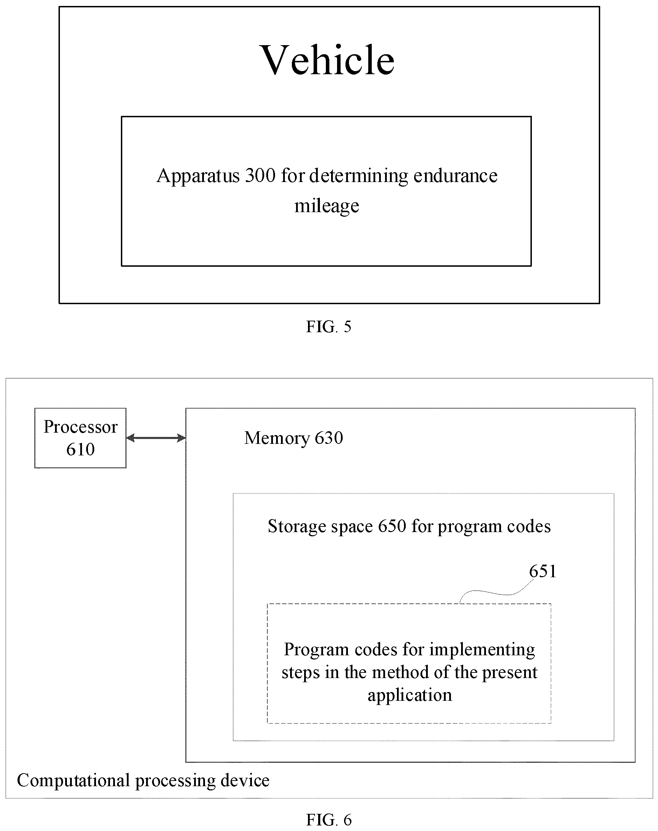

FIG. 5 is a structural block diagram of a vehicle according to an exemplary implementation. As shown in FIG. 5, the present invention also provides a vehicle, including the above-mentioned apparatus 300 for determining the endurance mileage.

The present invention further provides a computer program, comprising computer readable codes, when executed by a computational processing device, cause the computational processing device to implement the method for determining an endurance mileage as described in the above.

The present invention further provides a non-transitory computer readable storage medium, storing the computer program as described in the above.

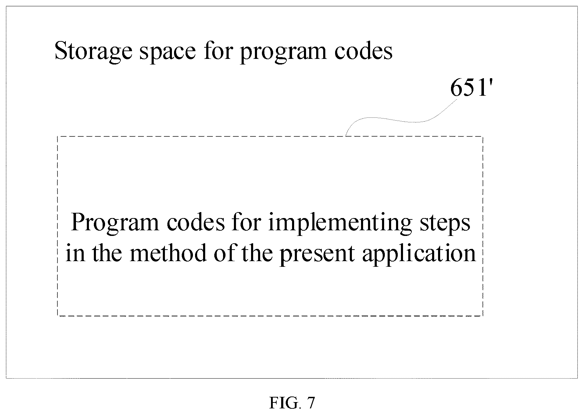

FIG. 6 provides a schematic structural diagram of a computational processing device. The computational processing device typically includes a processor 610 and a computer program product or computer readable medium in the form of a memory 630. The memory 630 may be an electronic memory, such as a flash memory, an electrically erasable programmable read only memory (EEPROM), EPROM, hard disk, or ROM. The memory 630 has a storage space 650 for program codes 651 for performing any of the method steps in the above-described methods. For example, the storage space 650 for the program code may include various program codes 651 for implementing various steps in the above methods, respectively. The program codes can be read from or written to one or more computer program products. These computer program products include program code carriers such as hard disks, compact disks (CDs), memory cards or floppy disks. Such computer program products are typically portable or fixed storage units as shown in FIG. 7. The storage unit may have storage segments, storage spaces, etc. arranged similarly to the memory 630 in the computational processing device of FIG. 6. The program code may, for example, be compressed in a suitable form. Typically, the storage unit includes a computer readable code 651', that is, a code readable by a processor such as 610, for example, which, when executed by a computational processing device, causes the computational processing device to perform any of the method steps in the above-described methods.

In addition, the terms "first" and "second" are only configured for descriptive purposes, and should not be construed as indicating or implying relative importance or implying the number of indicated technical features. Thus, a feature defined with "first", "second" may expressly or implicitly include at least one of that feature. In the description of the present invention, "plurality" means at least two, such as two, three, etc., unless expressly and specifically defined otherwise.

Any process or method description in the flowcharts or otherwise described herein may be understood to represent a module, segment, or portion of code comprising one or more executable instructions for implementing custom logical functions or steps of the process.

The logic and/or steps represented in flowcharts or otherwise described herein, for example, may be considered an ordered listing of executable instructions for implementing the logical functions, and may be embodied in any computer-readable medium, for use with, or in conjunction with, an instruction execution system, apparatus, or device (such as a computer-based system, a system including a processor, or other system that can fetch instructions from and execute instructions from an instruction execution system, apparatus, or device). For the purposes of this specification, a "computer-readable medium" can be any device that can contain, store, communicate, propagate, or transport the program for use by or in conjunction with an instruction execution system, apparatus, or device. More specific examples (non-exhaustive list) of computer readable media include the following: electrical connections with one or more wiring (electronic devices), portable computer disk cartridges (magnetic devices), random access memory (RAM), read only memory (ROM), erasable editable read only memory (EPROM or Flash Memory), fiber optic devices, and portable compact disc read only memory (CDROM). In addition, the computer readable medium may even be paper or other suitable medium on which the program may be printed, as the paper or other medium may be optically scanned, for example, followed by editing, interpretation, or processed by other suitable manner if necessary so as to obtain the program electronically and then the program is stored in computer memory.

It should be understood that portions of the present invention may be implemented in hardware, software, firmware, or a combination thereof. In the above-described embodiments, various steps or methods may be implemented in software or firmware stored in memory and executed by a suitable instruction execution system. For example, if the implementation in hardware is the same as the implementation manner in another embodiment, any one of the following techniques known in the art or any combination thereof can be adopted: discrete logic circuits with logic gates for implementing logic functions on data signals, application-specific integrated circuits with suitable combinational logic gates, programmable gate array (PGA), and field programmable gate arrays (FPGA) etc.

Those skilled in the art can understand that all or part of the steps included in the methods of the above can be completed by instructing the relevant hardware through a program, and the program can be stored in a computer-readable storage medium. When the program is executed, one or a combination of the steps of the method embodiment is implemented.

In addition, functional units in embodiments of the present invention may be integrated into one processing module, or each unit may exist physically alone, or two or more units may be integrated into one module. The above-mentioned integrated modules can be implemented in the form of hardware, and can also be implemented in the form of software function modules. If the integrated modules are implemented in the form of software functional modules and sold or used as independent products, the integrated modules may also be stored in a computer-readable storage medium.

The above-mentioned storage medium may be a read-only memory, a magnetic disk, an optical disk, and the like, although the embodiments of the present invention have been shown and described above, it should be understood that the above-mentioned embodiments are exemplary and should not be construed as limiting the present invention defined in the claims.

## Claims

1. A method for determining an endurance mileage, the method comprises:
acquiring (S101) a first hydrogen consumption parameter and a second hydrogen consumption parameter of a fuel cell of a vehicle and a current driving parameter of the vehicle, when a start signal of the vehicle is acquired;
determining (S102) an average hydrogen consumption per unit mileage of the vehicle according to the first hydrogen consumption parameter and the current driving parameter; and
determining (S103) a target endurance mileage of the vehicle according to the second hydrogen consumption parameter and the average hydrogen consumption per unit mileage; wherein the first hydrogen consumption parameter comprises: an instantaneous hydrogen consumption and a preset initial hydrogen consumption; and the current driving parameter comprises: a preset initial mileage and a current driving mileage of the vehicle;
the step of determining (S102) the average hydrogen consumption per unit mileage of the vehicle according to the first hydrogen consumption parameter and the current driving parameter comprises: determining the average hydrogen consumption per unit mileage based on a first formula according to the instantaneous hydrogen consumption, the preset initial hydrogen consumption, the current driving mileage, and the preset initial mileage; and
the first formula comprises: ${H}_{1} = \frac{{H}_{S} + {H}_{0}}{\left({D}_{1}+{D}_{0}∗0.1\right) ∗ 10} \times f \times 0.01 ,$
wherein, *H₁* represents the average hydrogen consumption per unit mileage, *H_{S}* represents the instantaneous hydrogen consumption, *H*₀ represents the preset initial hydrogen consumption, *D₁* represents the current driving mileage, *D₀* represents the preset initial mileage, and *f* is a mileage factor.

2. The method according to claim 1, wherein
the second hydrogen consumption parameter comprises: a current hydrogen remaining amount and a preset basic hydrogen amount of the fuel cell; the step of determining the target endurance mileage of the vehicle according to the second hydrogen consumption parameter and the average hydrogen consumption per unit mileage comprises:
determining the hydrogen consumption per 100 kilometers of the vehicle according to the average hydrogen consumption per unit mileage; and
determining the target endurance mileage based on a second formula according to the current remaining hydrogen amount, the preset basic hydrogen amount, and the hydrogen consumption per 100 kilometers;
the second formula comprises: ${D}_{R} = \frac{\left({H}_{R}-{H}_{UL}\right) ∗ 100}{{H}_{U}} ,$
wherein, *D_{R}* is the target endurance mileage, *H_{R}* is the current hydrogen remaining amount, *H_{UL}* is the preset basic hydrogen amount, and *H_{U}* is the hydrogen consumption per 100 kilometers.

3. The method according to any one of claims 1-2, wherein after the step of determining the target endurance mileage of the vehicle according to the second hydrogen consumption parameter and the average hydrogen consumption per unit mileage, the method further comprises:
outputting (S104) the target endurance mileage based on a current driving state of the vehicle being an idling driving state or non-idling driving state.

4. The method according to claim 3, wherein the step of outputting (S104) the target endurance mileage based on the current driving state of the vehicle comprises:
obtaining the current driving state of the vehicle;
determining a correction cycle for correcting the endurance mileage output by the vehicle according to the current driving state and an endurance mileage difference, wherein the endurance mileage difference is the difference between the target endurance mileage and an endurance mileage to be corrected that has been historically output; and
correcting the endurance mileage to be corrected according to the correction cycle for correcting the endurance mileage output by the vehicle, and outputting a corrected endurance mileage.

5. The method according to claim 4, wherein the step of determining the correction cycle for correcting the endurance mileage output by the vehicle according to the current driving state and the endurance mileage difference comprises:
in case that the endurance mileage to be corrected is greater than the target endurance mileage: if the vehicle is in the non-idling driving state, determining whether the endurance mileage difference is greater than or equal to a first preset difference threshold; when the endurance mileage difference is greater than or equal to the first preset difference threshold, adapting the correction cycle for correcting the endurance mileage output by the vehicle controlling the endurance mileage output by the vehicle to decrease progressively according to a first preset correction cycle; and when the endurance mileage difference is smaller than the first preset difference threshold, adapting the correction cycle for correcting the endurance mileage output by the vehicle controlling the endurance mileage output by the vehicle to decrease progressively according to a second preset correction cycle, wherein the second preset correction cycle is greater than the first preset correction cycle; and
in case that the endurance mileage to be corrected is greater than the target endurance mileage: if the vehicle is in the idling state, determining whether the endurance mileage difference is greater than a second preset difference threshold; when the endurance mileage difference is greater than the second preset difference threshold, adapting the correction cycle for correcting the endurance mileage output by the vehicle controlling the endurance mileage output by the vehicle to decrease progressively according to a third preset correction cycle; and when the endurance mileage difference is smaller than or equal to the second preset difference threshold, adapting the correction cycle for correcting the endurance mileage output by the vehicle controlling the endurance mileage currently output by the vehicle to remain unchanged, wherein the third preset correction cycle is greater than the second preset correction cycle, and the first preset difference threshold is greater than the second preset difference threshold.

6. The method according to claim 5, wherein the step of determining the correction cycle for correcting the endurance mileage output by the vehicle according to the driving state and the endurance mileage difference comprises:
determining, in case that the endurance mileage to be corrected is smaller than the target endurance mileage, whether the endurance mileage difference is greater than or equal to a third preset difference threshold; in case that the endurance mileage difference is greater than or equal to the third preset difference threshold, adapting the correction cycle for correcting the endurance mileage output by the vehicle to be: outputting the target endurance mileage as the corrected endurance mileage when the endurance mileage to be corrected is greater than or equal to a preset display threshold, and outputting a preset display invalid value when the endurance mileage to be corrected is smaller than the preset display threshold; wherein, the third preset difference threshold is greater than the second preset difference threshold; and
in case that the endurance mileage difference is smaller than the third preset difference threshold, and when the vehicle is in the non-idling driving state, adapting the correction cycle for correcting the endurance mileage output by the vehicle controlling the endurance mileage output by the vehicle to decrease progressively according to a fourth preset correction cycle; wherein the fourth preset correction cycle is greater than the third preset correction cycle; and when the vehicle is in the idling state, adapting the correction cycle for correcting the endurance mileage output by the vehicle controlling the endurance mileage currently output by the vehicle to remain unchanged.

7. The method according to claim 4, wherein the driving state further comprises a hydrogen refueling state; and the step of outputting (S104) the target endurance mileage based on the current driving state of the vehicle comprises:
obtaining a state of a hydrogen filler cap of the vehicle; and
in case that it is determined that the vehicle is in the hydrogen refueling state according to the state of the hydrogen filler cap of the vehicle, when the endurance mileage difference is greater than or equal to a fourth preset difference threshold, correcting the endurance mileage output by the vehicle to be the target endurance mileage; and when the endurance mileage difference is smaller than the fourth preset difference threshold, controlling the endurance mileage currently output by the vehicle to remain unchanged.

8. An apparatus (300) for determining an endurance mileage, wherein the apparatus comprises:
a first acquisition module (301), configured for acquiring a first hydrogen consumption parameter and a second hydrogen consumption parameter of a fuel cell of a vehicle and a current driving parameter of the vehicle, when a start signal of the vehicle is acquired;
a first determination module (302), configured for determining an average hydrogen consumption per unit mileage of the vehicle according to the first hydrogen consumption parameter and the current driving parameter; and
a second determination module (303), configured for determining a target endurance mileage of the vehicle according to the second hydrogen consumption parameter and the average hydrogen consumption per unit mileage; wherein
the first hydrogen consumption parameter comprises an instantaneous hydrogen consumption and a preset initial hydrogen consumption; and the current driving parameter comprises a preset initial mileage and a current driving mileage of the vehicle;
the first determination module (302) is configured for determining the average hydrogen consumption per unit mileage based on a first formula according to the instantaneous hydrogen consumption, the preset initial hydrogen consumption, the current driving mileage, and the preset initial mileage; and
the first formula comprises: ${H}_{1} = \frac{{H}_{S} + {H}_{0}}{\left({D}_{1}+{D}_{0}∗0.1\right) ∗ 10} \times f \times 0.01 ,$
wherein, *H₁* represents the average hydrogen consumption per unit mileage, *H_{S}* represents the instantaneous hydrogen consumption, *H*₀ represents the preset initial hydrogen consumption, *D₁* represents the current driving mileage, *D₀* represents the preset initial mileage, and *f* is a mileage factor.

9. A vehicle, comprising the apparatus (300) for determining the endurance mileage according to claim 8.

10. A computer program (651; 651'), comprising computer readable codes, which, when executed by a computational processing device, cause the computational processing device to implement the method for determining the endurance mileage according to any one of claims 1-7.

11. A computer-readable storage medium, storing the computer program (651') according to claim 10.

## Patentansprüche

1. Verfahren zur Bestimmung einer Reichweite, wobei das Verfahren aufweist:
Erfassen (S101) eines ersten Wasserstoffverbrauchsparameters und eines zweiten Wasserstoffverbrauchsparameters einer Brennstoffzelle eines Fahrzeugs und eines aktuellen Fahrparameters des Fahrzeugs, wenn ein Startsignal des Fahrzeugs erfasst wird;
Bestimmen (S102) eines durchschnittlichen Wasserstoffverbrauchs pro Streckeneinheit des Fahrzeugs gemäß dem ersten Wasserstoffverbrauchsparameter und dem aktuellen Fahrparameter; und
Bestimmen (S103) einer Zielreichweite des Fahrzeugs gemäß dem zweiten Wasserstoffverbrauchsparameter und dem durchschnittlichen Wasserstoffverbrauch pro Streckeneinheit; wobei
der erste Wasserstoffverbrauchsparameter aufweist: einen momentanen Wasserstoffverbrauch und einen voreingestellten anfänglichen Wasserstoffverbrauch; und der aktuelle Fahrparameter aufweist: eine voreingestellte anfängliche Strecke und eine aktuelle Fahrstrecke des Fahrzeugs;
der Schritt des Bestimmens (S102) des durchschnittlichen Wasserstoffverbrauchs pro Streckeneinheit des Fahrzeugs gemäß dem ersten Wasserstoffverbrauchsparameter und dem aktuellen Fahrparameter aufweist: Bestimmen des durchschnittlichen Wasserstoffverbrauchs pro Streckeneinheit basierend auf einer ersten Formel gemäß dem momentanen Wasserstoffverbrauch, dem voreingestellten anfänglichen Wasserstoffverbrauch, der aktuellen Fahrstrecke und der voreingestellten anfänglichen Strecke; und
die erste Formel lautet: ${H}_{1} = \frac{{H}_{S} + {H}_{0}}{\left({D}_{1}+{D}_{0}∗0.1\right) ∗ 10} \times f \times 0.01 ,$
wobei H1 den durchschnittlichen Wasserstoffverbrauch pro Streckeneinheit darstellt, HS den momentanen Wasserstoffverbrauch darstellt, H0 den voreingestellten anfänglichen Wasserstoffverbrauch darstellt, D1 die aktuelle Fahrstrecke darstellt, D0 die voreingestellte anfängliche Strecke darstellt, und f ein Streckenfaktor ist.

2. Verfahren gemäß Anspruch 1, wobei
der zweite Wasserstoffverbrauchsparameter aufweist: eine aktuelle Wasserstoffrestmenge und eine voreingestellte Wasserstoffgrundmenge der Brennstoffzelle; der Schritt des Bestimmens der Zielreichweite des Fahrzeugs gemäß dem zweiten Wasserstoffverbrauchsparameter und dem durchschnittlichen Wasserstoffverbrauch pro Streckeneinheit aufweist:
Bestimmen des Wasserstoffverbrauchs pro 100 Kilometer des Fahrzeugs gemäß dem durchschnittlichen Wasserstoffverbrauch pro Streckeneinheit; und
Bestimmen der Zielreichweite basierend auf einer zweiten Formel gemäß der aktuellen verbleibenden Wasserstoffmenge, der voreingestellten Wasserstoffgrundmenge und dem Wasserstoffverbrauch pro 100 Kilometer;
die zweite Formel lautet: ${D}_{R} = \frac{\left({H}_{R}-{H}_{UL}\right) ∗ 100}{{H}_{U}} ,$
wobei DR die Zielreichweite ist, HR die aktuelle Wasserstoffrestmenge ist, HUL die voreingestellte Wasserstoffgrundmenge ist, und HU der Wasserstoffverbrauch pro 100 Kilometer ist.

3. Verfahren gemäß einem der Ansprüche 1 bis 2, wobei nach dem Schritt des Bestimmens der Zielreichweite des Fahrzeugs gemäß dem zweiten Wasserstoffverbrauchsparameter und dem durchschnittlichen Wasserstoffverbrauch pro Streckeneinheit das Verfahren ferner aufweist:
Ausgeben (S104) der Zielreichweite basierend auf einem aktuellen Fahrzustand des Fahrzeugs, der ein Leerlauffahrzustand oder ein Nicht-Leerlauffahrzustand ist.

4. Verfahren gemäß Anspruch 3, wobei der Schritt des Ausgebens (S104) der Zielreichweite basierend auf dem aktuellen Fahrzustand des Fahrzeugs aufweist:
Erhalten des aktuellen Fahrzustands des Fahrzeugs;
Bestimmen eines Korrekturzyklus zum Korrigieren der vom Fahrzeug ausgegebenen Reichweite gemäß dem aktuellen Fahrzustand und einer Reichweitendifferenz, wobei die Reichweitendifferenz die Differenz zwischen der Zielreichweite und einer zu korrigierenden Reichweite, die historisch ausgegeben wurde, ist; und
Korrigieren der zu korrigierenden Reichweite gemäß dem Korrekturzyklus zum Korrigieren der vom Fahrzeug ausgegebenen Reichweite, und Ausgeben einer korrigierten Reichweite.

5. Verfahren gemäß Anspruch 4, wobei der Schritt des Bestimmens des Korrekturzyklus zum Korrigieren der vom Fahrzeug ausgegebenen Reichweite gemäß dem aktuellen Fahrzustand und der Reichweitendifferenz aufweist:
für den Fall, dass die zu korrigierende Reichweite größer als die Zielreichweite ist: falls das Fahrzeug im Nicht-Leerlauffahrzustand ist, Bestimmen, ob die Reichweitendifferenz größer als oder gleich einem ersten voreingestellten Differenzschwellenwert ist; wenn die Reichweitendifferenz größer als oder gleich dem ersten voreingestellten Differenzschwellenwert ist, Anpassen des Korrekturzyklus zum Korrigieren der vom Fahrzeug ausgegebenen Reichweite, die vom Fahrzeug ausgegebene Reichweite steuernd, um gemäß einem ersten voreingestellten Korrekturzyklus progressiv abzunehmen; und wenn die Reichweitendifferenz kleiner als der erste voreingestellte Differenzschwellenwert ist, Anpassen des Korrekturzyklus zum Korrigieren der vom Fahrzeug ausgegebenen Reichweite, die vom Fahrzeug ausgegebene Reichweite steuernd, um gemäß einem zweiten voreingestellten Korrekturzyklus progressiv abzunehmen, wobei der zweite voreingestellte Korrekturzyklus größer als der erste voreingestellte Korrekturzyklus ist; und
für den Fall, dass die zu korrigierende Reichweite größer als die Zielreichweite ist: falls das Fahrzeug im Leerlaufzustand ist, Bestimmen, ob die Reichweitendifferenz größer als ein zweiter voreingestellter Differenzschwellenwert ist; wenn die Reichweitendifferenz größer als der zweite voreingestellte Differenzschwellenwert ist, Anpassen des Korrekturzyklus zum Korrigieren der vom Fahrzeug ausgegebenen Reichweite, die vom Fahrzeug ausgegebene Reichweite steuernd, um gemäß einem dritten voreingestellten Korrekturzyklus progressiv abzunehmen; und wenn die Reichweitendifferenz kleiner als oder gleich dem zweiten voreingestellten Differenzschwellenwert ist, Anpassen des Korrekturzyklus zum Korrigieren der vom Fahrzeug ausgegebenen Reichweite, die vom Fahrzeug aktuell ausgegebene Reichweite steuernd, um unverändert zu bleiben, wobei der dritte voreingestellte Korrekturzyklus größer als der zweite voreingestellte Korrekturzyklus ist, und der erste voreingestellte Differenzschwellenwert größer als der zweite voreingestellte Differenzschwellenwert ist.

6. Verfahren gemäß Anspruch 5, wobei der Schritt des Bestimmens des Korrekturzyklus zum Korrigieren der vom Fahrzeug ausgegebenen Reichweite gemäß dem Fahrzustand und der Reichweitendifferenz aufweist:
Bestimmen, für den Fall, dass die zu korrigierende Reichweite kleiner als die Zielreichweite ist, ob die Reichweitendifferenz größer als oder gleich einem dritten voreingestellten Differenzschwellenwert ist; für den Fall, dass die Reichweitendifferenz größer als oder gleich dem dritten voreingestellten Differenzschwellenwert ist, Anpassen des Korrekturzyklus zum Korrigieren der vom Fahrzeug ausgegebenen Reichweite zu: Ausgeben der Zielreichweite als die korrigierte Reichweite, wenn die zu korrigierende Reichweite größer als oder gleich einem voreingestellten Anzeigeschwellenwert ist, und Ausgeben eines voreingestellten ungültigen Anzeigewertes, wenn die zu korrigierende Reichweite kleiner als der voreingestellte Anzeigeschwellenwert ist; wobei der dritte voreingestellte Differenzschwellenwert größer als der zweite voreingestellte Differenzschwellenwert ist; und
für den Fall, dass die Reichweitendifferenz kleiner als der dritte voreingestellte Differenzschwellenwert ist, und wenn das Fahrzeug im Nicht-Leerlauffahrzustand ist, Anpassen des Korrekturzyklus zum Korrigieren der vom Fahrzeug ausgegebenen Reichweite, die vom Fahrzeug ausgegebene Reichweite steuernd, um gemäß einem vierten voreingestellten Korrekturzyklus progressiv abzunehmen; wobei der vierte voreingestellte Korrekturzyklus größer als der dritte voreingestellte Korrekturzyklus ist; und wenn das Fahrzeug im Leerlaufzustand ist, Anpassen des Korrekturzyklus zum Korrigieren der vom Fahrzeug ausgegebenen Reichweite, die vom Fahrzeug aktuell ausgegebene Reichweite steuernd, um unverändert zu bleiben.

7. Verfahren gemäß Anspruch 4, wobei der Fahrzustand ferner einen Wasserstoffbetankungszustand aufweist; und der Schritt des Ausgebens (S104) der Zielreichweite basierend auf dem aktuellen Fahrzustand des Fahrzeugs aufweist:
Erhalten eines Zustands eines Wasserstoffeinfülldeckels des Fahrzeugs; und
für den Fall, dass bestimmt wird, dass das Fahrzeug gemäß dem Zustand des Wasserstoffeinfülldeckels des Fahrzeugs im Wasserstoffbetankungszustand ist, wenn die Reichweitendifferenz größer als oder gleich einem vierten voreingestellten Differenzschwellenwert ist, Korrigieren der vom Fahrzeug ausgegebenen Reichweite zu der Zielreichweite; und wenn die Reichweitendifferenz kleiner als der vierte voreingestellte Differenzschwellenwert ist, Steuern der vom Fahrzeug aktuell ausgegebenen Reichweite, um unverändert zu bleiben.

8. Vorrichtung (300) zur Bestimmung einer Reichweite, wobei die Vorrichtung aufweist:
ein erstes Erfassungsmodul (301), das dazu eingerichtet ist, einen ersten Wasserstoffverbrauchsparameter und einen zweiten Wasserstoffverbrauchsparameter einer Brennstoffzelle eines Fahrzeugs und einen aktuellen Fahrparameter des Fahrzeugs zu erfassen, wenn ein Startsignal des Fahrzeugs erfasst wird;
ein erstes Bestimmungsmodul (302), das dazu eingerichtet ist, einen durchschnittlichen Wasserstoffverbrauch pro Streckeneinheit des Fahrzeugs gemäß dem ersten Wasserstoffverbrauchsparameter und dem aktuellen Fahrparameter zu bestimmen; und
ein zweites Bestimmungsmodul (303), das dazu eingerichtet ist, eine Zielreichweite des Fahrzeugs gemäß dem zweiten Wasserstoffverbrauchsparameter und dem durchschnittlichen Wasserstoffverbrauch pro Streckeneinheit zu bestimmen; wobei
der erste Wasserstoffverbrauchsparameter einen momentanen Wasserstoffverbrauch und einen voreingestellten anfänglichen Wasserstoffverbrauch aufweist; und der aktuelle Fahrparameter eine voreingestellte anfängliche Strecke und eine aktuelle Fahrstrecke des Fahrzeugs aufweist;
das erste Bestimmungsmodul (302) dazu eingerichtet ist, den durchschnittlichen Wasserstoffverbrauch pro Streckeneinheit basierend auf einer ersten Formel gemäß dem momentanen Wasserstoffverbrauch, dem voreingestellten anfänglichen Wasserstoffverbrauch, der aktuellen Fahrstrecke und der voreingestellten anfänglichen Strecke zu bestimmen; und
die erste Formel lautet: ${H}_{1} = \frac{{H}_{S} + {H}_{0}}{\left({D}_{1}+{D}_{0}∗0.1\right) ∗ 10} \times f \times 0.01 ,$
wobei H1 den durchschnittlichen Wasserstoffverbrauch pro Streckeneinheit darstellt, HS den momentanen Wasserstoffverbrauch darstellt, H0 den voreingestellten anfänglichen Wasserstoffverbrauch darstellt, D1 die aktuelle Fahrstrecke darstellt, D0 die voreingestellte anfängliche Strecke darstellt, und f ein Streckenfaktor ist.

9. Fahrzeug, aufweisend die Vorrichtung (300) zur Bestimmung der Reichweite gemäß Anspruch 8.

10. Computerprogramm (651; 651'), aufweisend computerlesbare Codes, die, wenn sie von einer Rechenverarbeitungsvorrichtung ausgeführt werden, die Rechenverarbeitungsvorrichtung veranlassen, das Verfahren zur Bestimmung der Reichweite gemäß einem der Ansprüche 1 bis 7 zu implementieren.

11. Computerlesbares Speichermedium, das das Computerprogramm (651') gemäß Anspruch 10 speichert.

## Revendications

1. Procédé pour déterminer un kilométrage en autonomie, dans lequel le procédé comprend :
l'acquisition (S101) d'un premier paramètre de consommation d'hydrogène et d'un second paramètre de consommation d'hydrogène d'une pile à combustible d'un véhicule et d'un paramètre de conduite courante du véhicule, lorsqu'un signal de démarrage du véhicule est acquis ;
la détermination (S102) d'une consommation d'hydrogène moyenne par kilométrage unitaire du véhicule en fonction du premier paramètre de consommation d'hydrogène et du paramètre de conduite courante ; et
la détermination (S103) d'un kilométrage en autonomie cible du véhicule en fonction du second paramètre de consommation d'hydrogène et de la consommation d'hydrogène moyenne par kilométrage unitaire ;
dans lequel :
le premier paramètre de consommation d'hydrogène comprend : une consommation d'hydrogène instantanée et une consommation d'hydrogène initiale prédéfinie ; et le paramètre de conduite courante comprend : un kilométrage initial prédéfini et un kilométrage de conduite courante du véhicule ;
l'étape de détermination (S102) de la consommation d'hydrogène moyenne par kilométrage unitaire du véhicule en fonction du premier paramètre de consommation d'hydrogène et du paramètre de conduite courante comprend : la détermination de la consommation d'hydrogène moyenne par kilométrage unitaire sur la base d'une première formule en fonction de la consommation d'hydrogène instantanée, de la consommation d'hydrogène initiale prédéfinie, du kilométrage de conduite courante et du kilométrage initial prédéfini ; et
la première formule comprend : ${H}_{1} = \frac{{H}_{S} + {H}_{0}}{\left({D}_{1}+{D}_{0}+0.1\right) + 10} \times f \times 0.01 ,$
formule dans laquelle :
*H₁* représente la consommation d'hydrogène moyenne par kilométrage unitaire, *H_{S}* représente la consommation d'hydrogène instantanée, *H₀* représente la consommation d'hydrogène initiale prédéfinie, *D₁* représente le kilométrage de conduite courante, *D₀* représente le kilométrage initial prédéfini et *f* est un facteur de kilométrage.

2. Procédé selon la revendication 1, dans lequel :
le second paramètre de consommation d'hydrogène comprend : une quantité restante d'hydrogène courante et une quantité d'hydrogène de base prédéfinie de la pile à combustible ; et
l'étape de détermination du kilométrage en autonomie cible du véhicule en fonction du second paramètre de consommation d'hydrogène et de la consommation d'hydrogène moyenne par kilométrage unitaire comprend :
la détermination de la consommation d'hydrogène pour 100 kilomètres du véhicule en fonction de la consommation d'hydrogène moyenne par kilométrage unitaire ; et
la détermination du kilométrage en autonomie cible sur la base d'une seconde formule en fonction de la quantité d'hydrogène restante courante, de la quantité d'hydrogène de base prédéfinie et de la consommation d'hydrogène pour 100 kilomètres ; et
la seconde formule comprend : ${D}_{R} = \frac{\left({H}_{R}-{H}_{UL}\right) ∗ 100}{{H}_{U}} ,$
formule dans laquelle :
*D_{R}* est le kilométrage en autonomie cible, *H_{R}* est la quantité restante d'hydrogène courante, *H_{UL}* est la quantité d'hydrogène de base prédéfinie et *H_{U}* est la consommation d'hydrogène pour 100 kilomètres.

3. Procédé selon l'une quelconque des revendications 1 et 2, dans lequel, après l'étape de détermination du kilométrage en autonomie cible du véhicule en fonction du second paramètre de consommation d'hydrogène et de la consommation d'hydrogène moyenne par kilométrage unitaire, le procédé comprend en outre :
l'émission en sortie (S104) du kilométrage en autonomie cible sur la base d'un état de conduite courante du véhicule qui est un état de conduite au ralenti ou un état de conduite non au ralenti.

4. Procédé selon la revendication 3, dans lequel l'étape d'émission en sortie (S104) du kilométrage en autonomie cible sur la base de l'état de conduite courante du véhicule comprend :
l'obtention de l'état de conduite courante du véhicule ;
la détermination d'un cycle de correction pour corriger le kilométrage en autonomie qui est émis en sortie par le véhicule en fonction de l'état de conduite courante et d'une différence de kilométrage en autonomie, dans lequel la différence de kilométrage en autonomie est la différence entre le kilométrage en autonomie cible et un kilométrage en autonomie à corriger qui a été historiquement émis en sortie ; et
la correction du kilométrage en autonomie à corriger en fonction du cycle de correction pour corriger le kilométrage en autonomie qui est émis en sortie par le véhicule, et l'émission en sortie d'un kilométrage en autonomie corrigé.

5. Procédé selon la revendication 4, dans lequel l'étape de détermination du cycle de correction pour corriger le kilométrage en autonomie qui est émis en sortie par le véhicule en fonction de l'état de conduite courante et de la différence de kilométrage en autonomie comprend :
dans le cas où le kilométrage en autonomie à corriger est supérieur au kilométrage en autonomie cible : si le véhicule est dans l'état de conduite non au ralenti, la détermination de si la différence de kilométrage en autonomie est ou non supérieure ou égale à un premier seuil de différence prédéfini ; lorsque la différence de kilométrage en autonomie est supérieure ou égale au premier seuil de différence prédéfini, l'adaptation du cycle de correction pour corriger le kilométrage en autonomie qui est émis en sortie par le véhicule en commandant le kilométrage en autonomie qui est émis en sortie par le véhicule de telle sorte qu'il soit diminué de façon progressive en fonction d'un premier cycle de correction prédéfini ; et lorsque la différence de kilométrage en autonomie est inférieure au premier seuil de différence prédéfini, l'adaptation du cycle de correction pour corriger le kilométrage en autonomie qui est émis en sortie par le véhicule en commandant le kilométrage en autonomie qui est émis en sortie par le véhicule de telle sorte qu'il soit diminué de façon progressive en fonction d'un deuxième cycle de correction prédéfini, dans lequel le deuxième cycle de correction prédéfini présente une dimension plus grande que celle du premier cycle de correction prédéfini ; et
dans le cas où le kilométrage en autonomie à corriger est supérieur au kilométrage en autonomie cible : si le véhicule est dans l'état de conduite au ralenti, la détermination de si la différence de kilométrage en autonomie est ou non supérieure à un deuxième seuil de différence prédéfini ; lorsque la différence de kilométrage en autonomie est supérieure au deuxième seuil de différence prédéfini, l'adaptation du cycle de correction pour corriger le kilométrage en autonomie qui est émis en sortie par le véhicule en commandant le kilométrage en autonomie qui est émis en sortie par le véhicule de telle sorte qu'il soit diminué de façon progressive en fonction d'un troisième cycle de correction prédéfini ; et lorsque la différence de kilométrage en autonomie est inférieure ou égale au deuxième seuil de différence prédéfini, l'adaptation du cycle de correction pour corriger le kilométrage en autonomie qui est émis en sortie par le véhicule en commandant le kilométrage en autonomie qui est présentement émis en sortie par le véhicule de telle sorte qu'il reste inchangé, dans lequel le troisième cycle de correction prédéfini présente une dimension plus grande que celle du deuxième cycle de correction prédéfini et le premier seuil de différence prédéfini est supérieur au deuxième seuil de différence prédéfini.

6. Procédé selon la revendication 5, dans lequel l'étape de détermination du cycle de correction pour corriger le kilométrage en autonomie qui est émis en sortie par le véhicule en fonction de l'état de conduite et de la différence de kilométrage en autonomie comprend :
la détermination, dans le cas où le kilométrage en autonomie à corriger est inférieur au kilométrage en autonomie cible, de si la différence de kilométrage en autonomie est ou non supérieure ou égale à un troisième seuil de différence prédéfini ; dans le cas où la différence de kilométrage en autonomie est supérieure ou égale au troisième seuil de différence prédéfini, l'adaptation du cycle de correction pour corriger le kilométrage en autonomie qui est émis en sortie par le véhicule de telle sorte : que le kilométrage en autonomie cible soit émis en sortie en tant que kilométrage en autonomie corrigé lorsque le kilométrage en autonomie à corriger est supérieur ou égal à un seuil d'affichage prédéfini et qu'une valeur invalide d'affichage prédéfinie soit émise en sortie lorsque le kilométrage en autonomie à corriger est inférieur au seuil d'affichage prédéfini ; dans lequel le troisième seuil de différence prédéfini est supérieur au deuxième seuil de différence prédéfini ; et
dans le cas où la différence de kilométrage en autonomie est inférieure au troisième seuil de différence prédéfini et lorsque le véhicule est dans l'état de conduite non au ralenti, l'adaptation du cycle de correction pour corriger le kilométrage en autonomie qui est émis en sortie par le véhicule en commandant le kilométrage en autonomie qui est émis en sortie par le véhicule de telle sorte qu'il soit diminué de façon progressive en fonction d'un quatrième cycle de correction prédéfini ; dans lequel le quatrième cycle de correction prédéfini présente une dimension plus grande que celle du troisième cycle de correction prédéfini ; et lorsque le véhicule est dans l'état de conduite au ralenti, l'adaptation du cycle de correction pour corriger le kilométrage en autonomie qui est émis en sortie par le véhicule en commandant le kilométrage en autonomie qui est présentement émis en sortie par le véhicule de telle sorte qu'il reste inchangé.

7. Procédé selon la revendication 4, dans lequel l'état de conduite comprend en outre un état de rechargement en hydrogène ; et l'étape d'émission en sortie (S104) du kilométrage en autonomie cible sur la base de l'état de conduite courante du véhicule comprend :
l'obtention d'un état d'un bouchon de remplissage en hydrogène du véhicule ; et
dans le cas où il est déterminé que le véhicule est dans l'état de rechargement en hydrogène en fonction de l'état du bouchon de remplissage en hydrogène du véhicule, lorsque la différence de kilométrage en autonomie est supérieure ou égale à un quatrième seuil de différence prédéfini, la correction du kilométrage en autonomie qui est émis en sortie par le véhicule de telle sorte qu'il soit égal au kilométrage en autonomie cible ; et lorsque la différence de kilométrage en autonomie est inférieure au quatrième seuil de différence prédéfini, la commande du kilométrage en autonomie qui est présentement émis en sortie par le véhicule de telle sorte qu'il reste inchangé.

8. Appareil (300) pour déterminer un kilométrage en autonomie, dans lequel l'appareil comprend :
un premier module d'acquisition (301), configuré pour acquérir un premier paramètre de consommation d'hydrogène et un second paramètre de consommation d'hydrogène d'une pile à combustible d'un véhicule et un paramètre de conduite courante du véhicule, lorsqu'un signal de démarrage du véhicule est acquis ;
un premier module de détermination (302), configuré pour déterminer une consommation d'hydrogène moyenne par kilométrage unitaire du véhicule en fonction du premier paramètre de consommation d'hydrogène et du paramètre de conduite courante ; et
un second module de détermination (303), configuré pour déterminer un kilométrage en autonomie cible du véhicule en fonction du second paramètre de consommation d'hydrogène et de la consommation d'hydrogène moyenne par kilométrage unitaire ;
dans lequel :
le premier paramètre de consommation d'hydrogène comprend une consommation d'hydrogène instantanée et une consommation d'hydrogène initiale prédéfinie ; et le paramètre de conduite courante comprend un kilométrage initial prédéfini et un kilométrage de conduite courante du véhicule ;
le premier module de détermination (302) est configuré pour déterminer la consommation d'hydrogène moyenne par kilométrage unitaire sur la base d'une première formule en fonction de la consommation d'hydrogène instantanée, de la consommation d'hydrogène initiale prédéfinie, du kilométrage de conduite courante et du kilométrage initial prédéfini ; et
la première formule comprend : ${H}_{1} = \frac{{H}_{S} + {H}_{0}}{\left({D}_{1}+{D}_{0}+0.1\right) + 10} \times f \times 0.01 ,$
formule dans laquelle :
*H₁* représente la consommation d'hydrogène moyenne par kilométrage unitaire, *H_{S}* représente la consommation d'hydrogène instantanée, *H₀* représente la consommation d'hydrogène initiale prédéfinie, *D₁* représente le kilométrage de conduite courante, *D₀* représente le kilométrage initial prédéfini et f est un facteur de kilométrage.

9. Véhicule, comprenant l'appareil (300) pour déterminer le kilométrage en autonomie selon la revendication 8.

10. Programme informatique (651 ; 651'), comprenant des codes lisibles par ordinateur qui, lorsqu'ils sont exécutés par un dispositif de traitement informatique, forcent le dispositif de traitement informatique à mettre en œuvre le procédé pour déterminer le kilométrage en autonomie selon l'une quelconque des revendications 1 à 7.

11. Support de stockage lisible par ordinateur, stockant le programme informatique (651') selon la revendication 10.
